# EUROPEAN PATENT SPECIFICATION

(11) **EP 0 881 470 B1**
(45) Date of publication and mention of the grant of the patent: **13.08.2003**
(21) Application number: 97830255.2
(22) Date of filing: 28.05.1997
(51) Int. Cl.: G01D 5/34

(54) **Optical-type two-dimensional position sensor, in particular for automotive applications**
Optischer zweidimensionaler Positionsgeber, insbesondere für Anwendungen in Kraftfahrzeugen
Capteur optique bidimensionel de position en particulier pour les applications dans des automobiles

(43) Date of publication of application: 02.12.1998
(73) Proprietor: STMicroelectronics S.r.l., 20041 Agrate Brianza (Milano) (IT)
(72) Inventor: Villa, Flavio Francesco, 20159 Milano (IT); Vigna, Benedetto, 85100 Potenza (IT); Ferrari, Paolo, 21013 Gallarate (IT)
(74) Representative: Cerbaro, Elena, Dr.

(56) References cited:
- WO-A-91/20022
- DE-A- 3 405 688
- GB-A- 2 254 690
- US-A- 3 697 761
- US-A- 5 073 711

## Description

The present invention relates to an optical-type two-dimensional position sensor, in particular for automotive applications.

As is known, the auxiliary functions which at present are controlled from the steering wheel (multifunction switch systems), for example switching on running and tail lights, high-beam, low-beam and turn indicator lights, are provided by means of sliding mechanical contacts, production of which is particularly costly, and suffers from problems which are associated with the contacts themselves (wear, ageing etc).

Systems which do not require sliding mechanical contacts to control these functions are thus desirable.

In general these problems also apply to all applications which include transmission of a plurality of commands or signals by means of movement of a control unit which acts on sliding contacts, and in which there is a large number of activations of the control unit (see e.g. the joystick assembly disclosed in WO 91/20022).

The object of the present invention is to provide an optical-type position sensor which solves the above-described problem.

The present invention provides an optical-type two-dimensional position sensor, in particular for automotive applications, as defined in claim 1.

In order to enable the present invention to be understood, a preferred embodiment is now described, purely by way of nonlimiting example, with reference to the attached drawings, in which:
- figure 1 is a lateral view of a control device which uses the present sensor;
- figure 2 shows schematically the arrangement of sensor elements on a first component of the present sensor;
- figure 3 shows a second component of the present sensor;
- figure 4 shows a third component of the present sensor;
- figure 5 shows a block diagram of the first component of the present sensor;
- figures 6 and 7 show schematically two diagrams of cooperation between the components of the present sensor; and
- figures 8 and 9 show tables relating to codes which can be obtained for different relative positions of the components of the sensor.

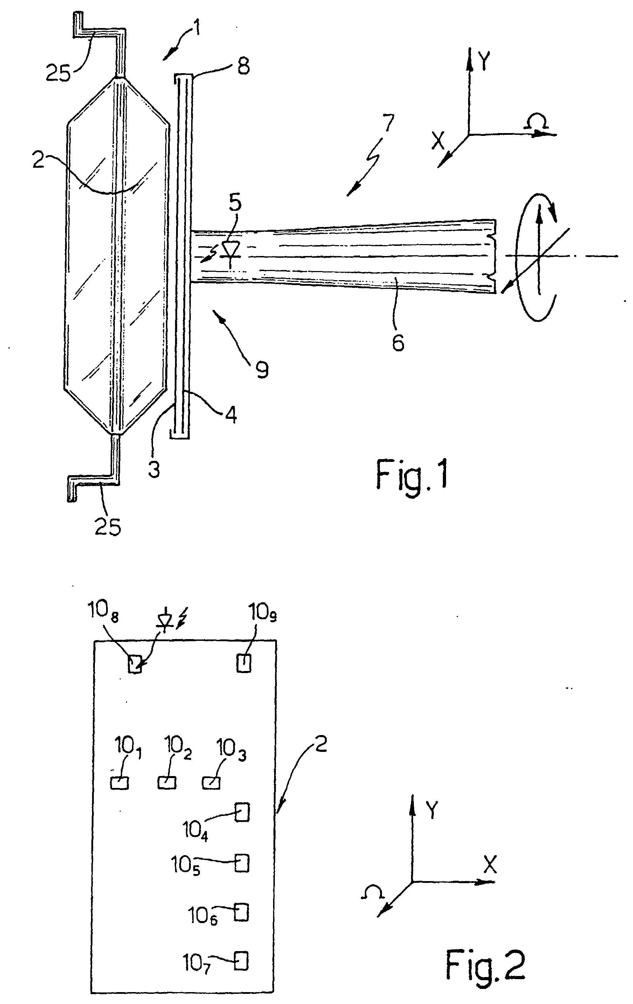

As shown in figure 1, the optical sensor 1 comprises an integrated device 2, a first polarisation filter 3, a second polarisation filter 4, and a light source 5. The polarisation filters 3, 4 and the light source 5 are integral with one another such as to form a selective light unit 9 which provides photo-emitting areas which alternate with non-emitting areas, and are displaceable relative to the integrated device 2, parallel to the latter (in proximity or in contact), such as to translate along a plane which is defined by two different coordinates X and Y, and to pivot around an axis Ω which is perpendicular to the plane X-Y.

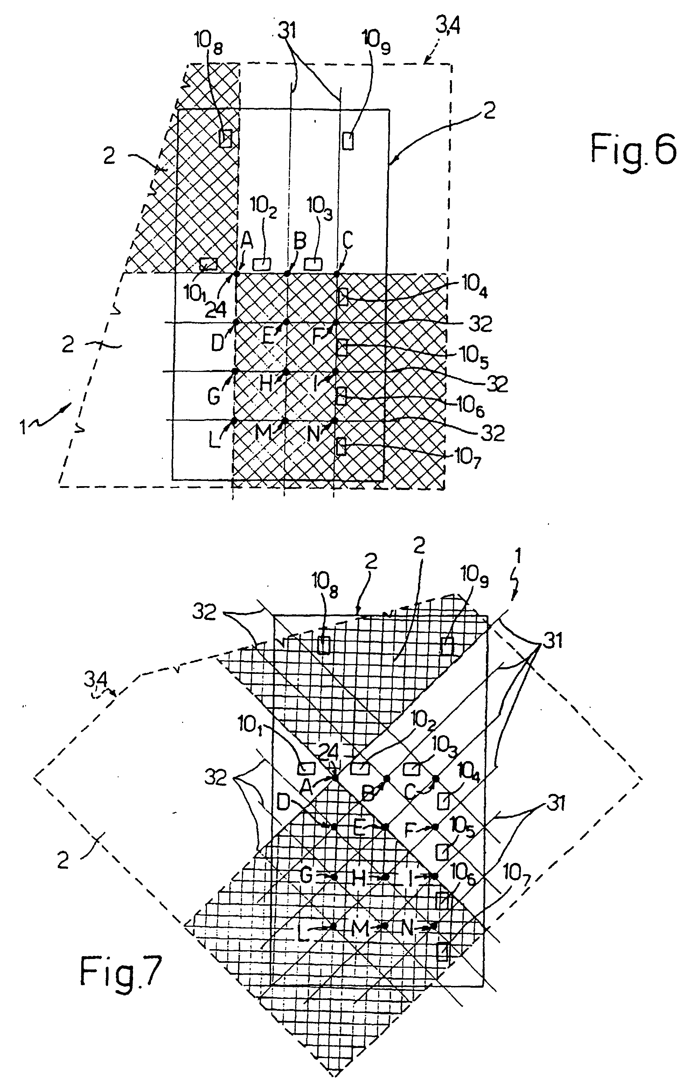

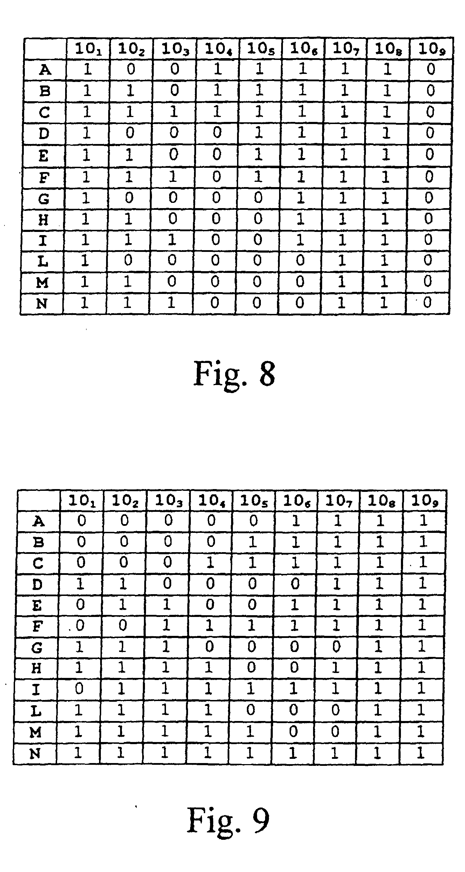

In the example shown, the sensor 1 is mounted on a control unit, in this case a lever 6, such as to form together with the latter a control device 7 which can be controlled manually or by a machine, and which at its output generates an electric control signal which can be used by an actuator. In particular the filters 3 and 4 are rendered integral with the lever 6 by means of a support 8, and the light source 5 (for example a set of diodes, a bulb or a laser source) is accommodated inside the lever 6, such that the selective light unit 9 follows the movements of the lever 6, of translation according to the axes X and Y, and of pivoting around the axis Ω. According to a preferred application of the invention, the lever 6 is in the form of a common control lever which is attached to the steering wheel by means of a coupling (not shown), forming a multifunction switch system such as to transform the actuations of the lever 6 by the driver into the pivoting-translation movements required for the selective light unit 9. In particular, a guide mechanism not shown permits only discrete movements of the selective light unit 9 relative to the integrated device 2, as described in greater detail with reference to figures 6 and 7.

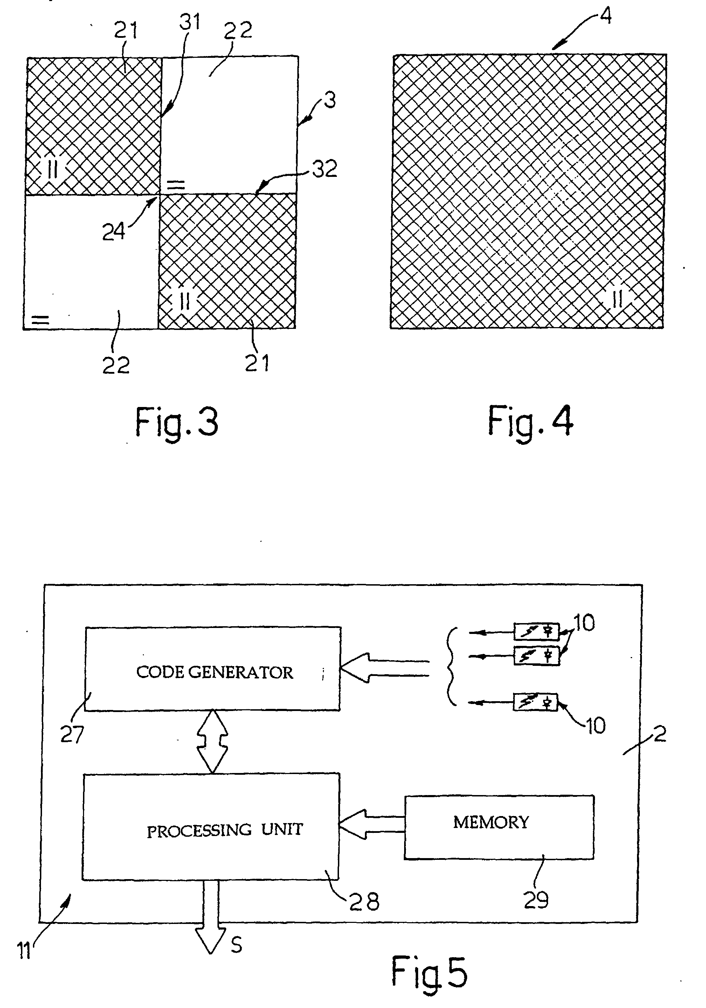

As shown in figure 5, the integrated device 2 consists of a plurality of light-sensitive elements, hereinafter known as sensor elements 10 (for example receiver photo-diodes which are of a known type and are therefore not shown), and of a coding system 11. The integrated device 2 is assembled in a package which is transparent to light (as schematised by the lines in figure 1) such as to allow the light emitted by the photo-emitting areas of the selective optical unit 9 to reach the sensor elements 10.

Figure 2 shows a possible arrangement of the sensor elements 10 for detection of 3 x 4 positions of the selective light unit 9 in the plane X-Y, and of pivoting of ±45° around the direction Ω (i.e. altogether of three different angular positions of the unit 9). As can be seen, three sensor elements 10₁-10₃ are spaced along a first direction (direction X), four sensor elements 10₄-10₇ are spaced along a second direction (direction Y) perpendicular to the first direction X, and there are two further sensor elements 10₈ and 10₉ which are disposed spaced from the sensor elements 10₁-10₇, for detection of the pivoting angle.

In general however, in order to detect M positions along the direction X, and N positions along the direction Y, at least M + N sensor elements are needed, whereas in order to detect the pivoting, two sensor elements are used in the case of ±45° pivoting angle, and four sensor elements in the case of ±30° pivoting angle relative to a nominal position at an angle of zero.

As shown in the front view in figure 3, the first polarisation filter 3 has four quadrants, which are polarised alternately parallel to the direction of propagation of the light (quadrants 21 identified by the symbol ∥) and perpendicular to the direction of propagation of the light (quadrants 22, identified by the symbol =), forming a centre 24 and having such dimensions that, according to the position assumed by the selective light unit 9 relative to the integrated device 2, each of the sensor elements 10 sees a specific quadrant 21, 22. In addition, as shown in the front view in figure 4, the second polarisation filter 4 has uniform polarisation which is parallel to the direction of propagation of the light. In practice, the second filter 4 filters the light generated by the light source 5 such as to permit passage of the polarised component parallel to the direction of propagation only, and the first filter 3 permits passage of the light filtered through the quadrants 21 only; as a result, only the sensor elements 10₁-10₉ which face the quadrants 21 detect the light, generating a corresponding electric signal which for example has a value greater than zero.

As shown in figure 5, the signals generated by the sensor elements 10 are supplied to the coding system 11, which comprises a code generator block 27, a processing unit 28 and a memory 29 which stores the association of each code which can be generated by the generator block 27 with a command.

In particular the code generator block 27 receives the electric signals generated by the sensor elements 10 which face the quadrants 21, and generates a digital code with several bits, for example generating a logic "1" in the case of receipt of the signal (the corresponding sensor element 10 faces a quadrant 21) and a logic "0" in the absence of a signal (the corresponding sensor element 10 faces a quadrant 22). In practice the code generator block 27 can consist of a set of comparators which compare the signal received with a reference value which is close to zero. The binary code thus obtained (which has nine bits in the case of the integrated device with nine sensor elements 10 in figure 1) is supplied to the processing unit 28, which, on the basis of the code received and the code stored in the memory 29, determines the corresponding command (lighting of the running and tail lights, low- and high-beam lights or another command) and generates an output signal S, which is supplied via pins 25 of the integrated device (figure 1) to the corresponding actuator (not shown) and/or to a system of the vehicle (not shown) for processing.

It will be appreciated that in order to distinguish the various positions of the selective light unit 9 relative to the integrated device 2, each position which can be assumed by the unit 9 must have an individual code which does not coincide with that of any other position, i.e. in each position, at least one of the sensor elements 10 must be facing a quadrant 21, 22 which differs from that for all the other positions. In particular as far as translation is concerned, for each translation of the selective light unit 9, the centre 24 of the filters 3, 4 must go to a different side of at least one of the seven sensor elements 10₁-10₇; in the case of the sensor elements 10₁-10₉ in figure 1, the centre 24 of the first filter 3 can thus assume approximately one of the positions shown in figure 6, identified by the letters A-N.

In particular in figure 6, the horizontal and vertical lines are aligned in each position A-N with separation lines indicated 31, 32 of the quadrants of the first polarisation filter 3 (figure 3) and the selective light unit 9 is represented in the position in which the centre 24 of the first polarisation filter 3 is disposed in the position A; consequently displacements of the unit 9 relative to the integrated device 2 such as to make the centre 24 of the first polarisation filter 3 correspond to the positions A-N, give rise to generation of corresponding codes, as shown for example in the table in figure 8.

As can be seen, the sensor elements 10₈ and 10₉ are constant for each translation in the plane and assume different values.

Similarly, figure 7 shows the position of the selective light unit 9 relative to the integrated device 2 when the unit 9 is centred on the position A and pivoted by 45° clockwise relative to figure 6. It also shows the lines of separation 31, 32 of the quadrants 21, 22 of the first polarisation filter 3 in the different positions A-N; as can be seen, these separation lines 31, 32 are now inclined by ±45°. In this case therefore, the coding shown in the table in figure 9 is obtained.

As can be seen, the sensor elements 10₈ and 10₉ are always associated with a logic "1".

In a manner not shown, owing to the symmetry of the system, pivoting of the selective light unit 9 in the direction opposite to that in figure 7 (i.e. by 45° anti-clockwise relative to figure 6) provides a table which is complementary to that in figure 9.

The optical sensor described has the following advantages. Firstly it has a low cost, associated with the manufacturing cost of the integrated devices; furthermore it is highly reliable and durable since it does not involve the use of sliding contacts, and the selective optical unit can also be slightly spaced from the integrated device 2. Also, the number of controls which can be implemented can easily be increased.

Finally it is apparent that changes and variants can be made to the sensor described and illustrated here, without departing from the protective context of the present invention, as defined in the attached claims. In particular it is emphasised that if the light source 5 consists of a laser source or another source of polarised light, the second polarisation filter 4 is no longer necessary; in addition the processing electronics for the signals generated by the sensor elements 10, or at least some of them, need not be integrated with the sensor elements 10, if this is desirable or appropriate for specific applications.

## Claims

1. Optical-type two-dimensional position sensor (1), in particular for automotive applications, **characterised in that** it comprises a selective optical unit (9) with a plurality of areas, including light emission areas (21) which alternate with areas (22) without light emission, said selective optical unit (9) being displaceable relative to a plurality of light-sensitive elements (10₁-10₉), and **in that** in each relative position of said selective optical unit (9), said light-sensitive elements (10₁-10₉) face each an area of said plurality of areas for generating a signal having a value depending on the area of said selective optical unit (9) which faces each time said light-sensitive element.

2. Sensor according to claim 1, **characterised in that** said selective optical unit (9) is displaceable in a plane along a first (X) and a second (Y) diverging direction and pivots around a third direction (Ω) which is orthogonal to said first and second direction, said plurality of light-sensitive elements (10₁-10₉) comprising a first group of sensitive elements (10₁-10₃) which are spaced along said first direction, a second group of light-sensitive elements (10₄-10₇) which are spaced along said second direction, and a third group of sensitive elements (10₈-10₉) which detect the angular position of said selective optical unit (9).

3. Sensor according to claim 1 or claim 2, **characterised in that** said selective optical sensor (9) comprises a light generator (4,5) and a filter element (3) which has areas (21) which are transparent and areas (22) which are impervious to light.

4. Sensor according to claim 3, **characterised in that** said light generator (4,5) is a light generator which is polarised with a predetermined polarisation, and said filter element comprises a first polarisation filter (3) which has first areas (21) having a polarisation which is parallel to said predetermined polarisation, and second areas (22) having a polarisation which is perpendicular to said predetermined polarisation.

5. Sensor according to claim 4, **characterised in that** said light generator (4,5) comprises a non-polarised light source (5) and a second polarisation filter (4), providing the light said predetermined polarisation.

6. Sensor according to claim 4, **characterised in that** said light generator (4,5) comprises a laser source.

7. Light sensor according to any one of claims 4-6, **characterised in that** said first polarisation filter (3) has four quadrants formed by said first two areas (21) and said second two areas (22), which alternate with one another.

8. Sensor according to any one of the preceding claims, **characterised in that** said light-sensitive elements (10₁-10₉) comprise photo-diodes.

9. Sensor according to any one of the preceding claims, **characterised in that** said light-sensitive elements (10₁-10₉) are incorporated in an integrated device (2) which has a transparent package.

10. Sensor according to claim 9, **characterised in that** said integrated device (2) also comprises a code generator unit (27), a code memory (29) and a processing unit (28); said code generator unit (27) being connected to said light-sensitive elements and generating a digital code which is correlated to the output voltage of said light-sensitive elements (10₁-10₉); said code memory (29) storing a correspondence between a plurality of codes and a plurality of commands; and said processing unit (28) being connected to said code generator unit and said processing unit for generating control signals (S) which correspond to digital codes received from said code generator unit according to said stored correspondence.

11. Control device (7) comprising a control member (6) which is displaceable into a plurality of different positions, and can be actuated for generating a control signal (S) which is correlated to a respective one of said plurality of positions, **characterised in that** it comprises an optical-type sensor (1) according to any one of the preceding claims.

12. Control device according to claim 11, **characterised in that** said control member comprises a control lever (6) for a multi-functional switch system at the steering wheel.

## Patentansprüche

1. Zweidimensionalmessender Positionssensor (1) des optischen Typs, insbesondere für Automobilanwendungen, **dadurch gekennzeichnet, dass** er eine selektive optische Einheit (9) mit einer Mehrzahl von Bereichen aufweist, die Lichtemissionsbereiche (21) einschliessen, die mit Bereichen (22) ohne Lichtemission alternieren, wobei die selektive optische Einheit (9) relativ zu einer Mehrzahl von lichtempfindlichen Elementen (10₁ - 10₉) versetzbar ist, und dadurch, dass bei jeder Relativposition der selektiven optischen Einheit (9) die lichtempfindlichen Elemente (10₁ - 10₉) je einem Bereich der Mehrzahl von Bereichen gegenüberstehen zum Erzeugen eines Signals mit einem Wert, der von dem Bereich der selektiven optischen Einheit (9) abhängt, der jedesmal dem lichtempfindlichen Element gegenübersteht.

2. Sensor nach Anspruch 1, **dadurch gekennzeichnet, dass** die selektive optische Einheit (9) in einer Ebene entlang einer ersten (X) und einer zweiten (Y), abweichenden Richtung versetzbar ist und sich um eine dritte Richtung (Ω) dreht, die orthogonal zu der ersten und der zweiten Richtung ist, wobei die Mehrzahl von lichtempfindlichen Elementen (10₁ - 10₉) eine erste Gruppe von empfindlichen Elementen (10₁ - 10₃), die entlang der ersten Richtung voneinander beabstandet sind, eine zweite Gruppe von lichtempfindlichen Elementen (10₄ - 10₇), die entlang der zweiten Richtung voneinander beabstandet sind, und eine dritte Gruppe von empfindlichen Elementen (10₈ - 10₉), welche die Winkelposition der selektiven optischen Einheit (9) detektieren, aufweist.

3. Sensor nach Anspruch 1 oder Anspruch 2, **dadurch gekennzeichnet, dass** der selektive optische Sensor (9) eine Lichterzeugereinrichtung (4, 5) und ein Filterelement (3) aufweist, das Bereiche (21), die transparent sind, und Bereiche (22), die für Licht undurchlässig sind, aufweist.

4. Sensor nach Anspruch 3, **dadurch gekennzeichnet, dass** die Lichterzeugereinrichtung (4, 5) eine Lichterzeugereinrichtung ist, die mit einer vorbestimmten Polarisation polarisiert ist, und dass das Filterelement ein erstes Polaristionsfilter (3) aufweist, das erste Bereiche (21) mit einer Polarisation, die mit der vorbestimmten Polarisation parallel ist, und zweite Bereiche (22) mit einer Polarisation, die zu der vorbestimmten Polarisation rechtwinklig ist, aufweist.

5. Sensor nach Anspruch 4, **dadurch gekennzeichnet, dass** die Lichterzeugereinrichtung (4, 5) eine nicht polarisierte Lichtquelle (5) und ein zweites Polarisationsfilter (4), das dem Licht die vorbestimmte Polarisation verschafft, aufweist.

6. Sensor nach Anspruch 4, **dadurch gekennzeichnet, dass** die Lichterzeugereinrichtung (4, 5) eine Laserquelle aufweist.

7. Lichtsensor nach einem der Ansprüche 4 bis 6, **dadurch gekennzeichnet, dass** das erste Polarisationsfilter (3) vier Quadranten aufweist, die durch die ersten zwei Bereiche (21) und die zweiten zwei Bereiche (22), die miteinander alternieren, gebildet werden.

8. Sensor nach einem der vorstehenden Ansprüche, **dadurch gekennzeichnet, dass** die lichtempfindlichen Elemente (10₁ - 10₉) Fotodioden aufweisen.

9. Sensor nach einem der vorstehenden Ansprüche, **dadurch gekennzeichnet, dass** die lichtempfindlichen Elemente (10₁ - 10₉) in einer integrierten Vorrichtung (2), die ein transparentes Gehäuse hat, aufgenommen sind.

10. Sensor nach Anspruch 9, **dadurch gekennzeichnet, dass** die integrierte Vorrichtung (2) auch eine Codegeneratoreinheit (27), einen Codespeicher (29) und eine Verarbeitungseinheit (28) aufweist; wobei die Codegeneratoreinheit (27) mit den lichtempfindlichen Elementen verbunden ist und einen digitalen Code erzeugt, der mit der Ausgangsspannung der lichtempfindlichem Elemente (10₁ - 10₉) korreliert ist; wobei der Codespeicher (29) eine Zuordnung zwischen einer Mehrzahl von Codes und einer Mehrzahl von Befehlen speichert; und wobei die Verarbeitungseinheit (28) mit der Codegeneratoreinheit verbunden ist und die Verarbeitungseinheit zum Erzeugen von Steuersignalen (S) dient, die mit digitalen Codes korrespondieren, die von der Codegeneratoreinheit gemäß der gespeicherten Zuordnung empfangen werden.

11. Steuervorrichtung (7), die ein Steuerelement (6) aufweist, welches in eine Mehrzahl von verschiedenen Positionen versetzbar ist und zum Erzeugen eines Steuersignals (S) betätigt werden kann, das mit einem entsprechenden aus der Mehrzahl von Positionen korreliert ist, **dadurch gekennzeichnet, dass** es einen Sensor des optischen Typs (1) nach einem der vorstehenden Ansprüche aufweist.

12. Steuervorrichtung nach Anspruch 11, **dadurch gekennzeichnet, dass** das Steuerelement einen Steuerhebel (6) für ein Multifunktionsschaltersystem bei dem Steuerrad aufweist.

## Revendications

1. Détecteur de position à deux dimensions de type optique (1), en particulier pour des applications dans l'industrie automobile, **caractérisé en ce qu'**il comprend une unité optique sélective (9) avec une pluralité de zones, comprenant des zones d'émission de lumière (21) qui alternent avec des zones (22) sans émission de lumière, ladite unité optique sélective (9) étant apte à être déplacée par rapport à une pluralité d'éléments sensibles à la lumière (10₁-10₉) et **en ce que** dans chaque position relative de ladite unité optique sélective (9), lesdits éléments sensibles à la lumière (10₁-10₉) sont chacun en vis à vis d'une zone de ladite pluralité de zones pour générer un signal ayant une valeur fonction sur la zone de ladite unité optique sélective (9) qui se trouve en vis à vis chaque fois dudit élément sensible à la lumière.

2. Détecteur selon la revendication 1, **caractérisé en ce que** ladite unité optique sélective (9) est apte à être déplacée dans un plan le long d'une première direction divergente (X) et d'une deuxième direction divergente (Y) et pivote autour d'une troisième direction (Ω) qui est orthogonale à ladite première et deuxième direction, ladite pluralité d'éléments sensibles à la lumière (10₁-10₉) comprenant un premier groupe d'éléments sensibles (10₁-10₃) qui sont espacés le long de ladite première direction, un deuxième groupe d'éléments sensibles à la lumière (10₄-10₇) qui sont espacés le long de ladite direction et un troisième groupe d'éléments sensibles (10₈-10₉) qui détectent la position angulaire de ladite unité optique sélective (9).

3. Détecteur selon la revendication 1 ou 2, **caractérisé en ce que** ledit détecteur optique sélectif (9) comprend un générateur de lumière (4, 5) et un filtre (3) qui a des zones (21) qui sont transparentes et des zones (22) qui sont imperméables à la lumière.

4. Détecteur selon la revendication 3, **caractérisé en ce que** ledit générateur de lumière (4, 5) est un générateur de lumière qui est polarisé avec une polarisation prédéterminée et ledit filtre comprend un premier filtre de polarisation (3) qui a une première zone (21) ayant une polarisation qui est parallèle à ladite polarisation prédéterminée et une deuxième zone (22) ayant une polarisation qui est perpendiculaire à ladite polarisation prédéterminée.

5. Détecteur selon la revendication 4, **caractérisé en ce que** ledit générateur de lumière (4, 5) comprend une source de lumière non polarisée (5) et un deuxième filtre de polarisation (4) fournissant la lumière à ladite polarisation prédéterminée.

6. Détecteur selon la revendication 4, **caractérisé en ce que** ledit générateur de lumière (4, 5) comprend une source laser.

7. Détecteur selon l'une quelconque des revendications 4 à 6, **caractérisé en ce que** ledit premier filtre de polarisation (3) présente quatre quadrants formés par lesdites premières deux zones (21) et lesdites deuxièmes deux zones (22) qui alternent l'une avec l'autre.

8. Détecteur selon l'une quelconque des revendications précédentes, **caractérisé en ce que** lesdits éléments sensibles à la lumière (10₁-10₉) comprennent des photodiodes.

9. Détecteur selon l'une quelconque des revendications précédentes, **caractérisé en ce que** lesdits éléments sensibles à la lumière (10₁-10₉) sont incorporés dans un dispositif intégré (2) qui a un conditionnement transparent.

10. Détecteur selon la revendication 9, **caractérisé en ce que** ledit dispositif intégré (2) comprend également une unité génératrice de codes (27), une mémoire de codes (29) et une unité de traitement (28), ladite unité génératrice de codes (27) étant reliée auxdits éléments sensibles à la lumière et générant un code numérique et en corrélation avec la tension de sortie desdits éléments sensibles à la lumière (10₁-10₉), ladite mémoire de codes (29) mémorisant une correspondance entre une pluralité de codes et une pluralité de commandes et ladite unité de traitement (28) étant reliée à ladite unité génératrice de codes et à ladite unité de traitement pour générer des signaux de commande (S) qui correspondent aux codes numériques reçus à partir de ladite unité génératrice de codes conformément à ladite correspondance mémorisée.

11. Dispositif de commande (7) comprenant un élément de commande (6) qui est apte à être déplacé dans une pluralité de positions différentes et qui peut être actionné pour générer un signal de commande (S) qui est en corrélation avec un signal respectif desdites pluralités de positions, **caractérisé en ce qu'**il comprend un détecteur de type optique (1) selon l'une quelconque des revendications précédentes.

12. Dispositif de commande selon la revendication 11, **caractérisé en ce que** ledit élément de commande comprend un levier de commande (6) pour un système de commutation multifonction au niveau du volant.
